# EUROPÄISCHE PATENTSCHRIFT

(11) **EP 0 808 083 B1**
(45) Veröffentlichungstag und Bekanntmachung des Hinweises auf die Patenterteilung: **24.09.2003**
(21) Anmeldenummer: 97106836.6
(22) Anmeldetag: 24.04.1997
(51) Int. Cl.: H02M 7/537, H05B 41/28

(54) **Schaltungsanordnung zum Betreiben einer Last und elektronisches Vorschaltgerät mit einer derartigen Schaltungsanordnung zum Betreiben einer Lampe**
Circuit for operating a load and electronic ballast with such a circuit for operating a lamp
Circuit pour l'alimentation d'une charge et ballast électronique avec un tel circuit pour l'alimentation d'une lampe

(30) Priorität: 15.05.1996 DE 19619745
(43) Veröffentlichungstag der Anmeldung: 19.11.1997
(73) Patentinhaber: TridonicAtco GmbH & Co. KG, 6851 Dornbirn (AT)
(72) Erfinder: Bruce, David J., Riddells Creek, Victoria 3431 (AU)
(74) Vertreter: Schmidt-Evers, Jürgen, Dipl.-Ing.

(56) Entgegenhaltungen:
- EP-A- 0 642 295
- EP-A- 0 696 841
- DE-A- 3 923 311

## Beschreibung

Die vorliegende Erfindung betrifft eine Schaltungsanordnung nach dem Oberbegriff des Anspruchs 1 zum Betreiben einer Last und ein elektronisches Vorschaltgerät mit einer derartigen Schaltungsanordnung zum Betreiben einer an die Schaltungsanordnung anschließbaren Lampe, insbesondere einer Gasentladungslampe.

Insbesondere betrifft die Erfindung Konverterschaltungen, die zum Einsatz in elektronischen Vorschaltgeräten zum Ansteuern von Lampen geeignet sind.

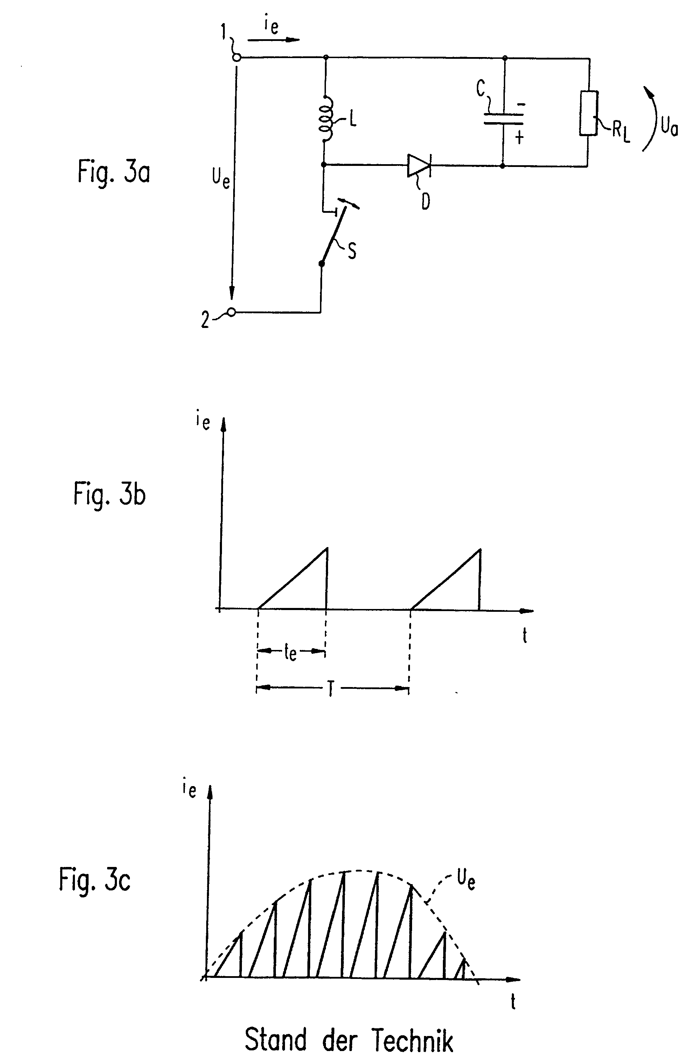

Eine bekannte Konverterschaltung ist der sogenannte buck-boost-Konverter. Eine entsprechende Schaltung ist in Fig. 3a dargestellt. Die buck-boost-Konverterschaltung umfaßt eine Spule L und einen mit der Spule L über eine Diode D verbundenen Elektrolyt-Kondensator C. Des weiteren ist ein steuerbarer Schalter S vorhanden, der sich beliebig öffnen und schließen läßt. Eine Last R_{L} ist parallel an den Kondensator C anschließbar. An den Eingangsanschlüssen 1, 2 der Konverterschaltung liegt eine (halbwellen)gleichgerichtete Eingangsspannung Uₑ an. Ist der Schalter S geschlossen, fließt über die Spule L Strom, während bei einem offenen Schalter S kein Strom fließen kann, so daß - wie in Fig. 3b dargestellt - ein sägezahnförmiger Stromverlauf iₑ(t) mit Unterbrechungen aufgrund der Schaltzeiten des Schalters S entsteht. In Fig. 3b entspricht tₑ der Einschaltzeit des Schalters S und T dem Periodenintervall des Einschaltvorgangs. Aus Fig. 3c ist ersichtlich, daß die Amplitude der Sägezähne von iₑ(t) an den Verlauf der Halbwelle der Eingangsspannung Uₑ angenähert ist. Eine Halbwelle der sinusförmigen Eingangsspannung Uₑ stellt somit die Hüllkurve für die Amplitude von iₑ(t) dar. Um den Leistungsfaktor hoch zu halten, d.h. die Wirkungsleistungsaufnahme zu maximieren, wird angestrebt, daß die Amplitude des Eingangsstroms iₑ(t) mit der Eingangsspannung Uₑ bzw. der Netzspannung vollständig in Phase verläuft.

Der buck-boost-Konverter stellt eine Kombination aus einem sogenannten buck-Konverter und einem boost-Konverter dar. Bei einem buck-Konverter muß stets sichergestellt werden, daß die Eingangsspannung Uₑ höher als die an der Last R_{L} anliegende Ausgangsspannung Uₐ ist. Dagegen sind die erforderliche Spannungsverhältnisse bei einem boost-Konverter umgekehrt. Der buck-boost-Konverter weist den Vorteil auf, daß beide Spannungsverhältnisse möglich sind. Somit ist es bei dem buck-boost-Konverter auch möglich, daß die Eingangsspannung genauso groß wie die Ausgangsspannung ist. Die Wahl des Verhältnisses von der Eingangsspannung Uₑ zu der Ausgangsspannung Uₐ erfolgt über das Tastverhältnis des Schalters S, d.h. durch Verändern der Einschaltzeit tₑ des Schalter S. Eine buck-boost-Konverterschaltung zum Betreiben einer Gasentladungslampe ist in der EP-A1-0 642 295 der Anmelderin beschrieben.

Die buck-boost-Konverter-Schaltung weist jedoch den Nachteil auf, daß zwischen den einzelnen Sägezähnen des Stromverlaufs iₑ(t) Unterbrechungen auftreten, aufgrund derer Oberwellen erzeugt werden, die in das Netz zurückgestrahlt werden und somit eigens ausgefiltert werden müssen.

Es wurde daher die sogenannte SEPIC (Single Ended Primary Inductance Converter)-Schaltung entwickelt, die dieselben Vorteile wie die buck-boost-Konverterschaltung aufweist und zudem Unterbrechungen in dem Stromverlauf des Eingangsstroms iₑ(t) vermeidet. Der Verlauf des Eingangsstroms iₑ(t) ist mit einem geringen Rippel stark an die Hüllkurve der Eingangsspannung Uₑ angenähert.

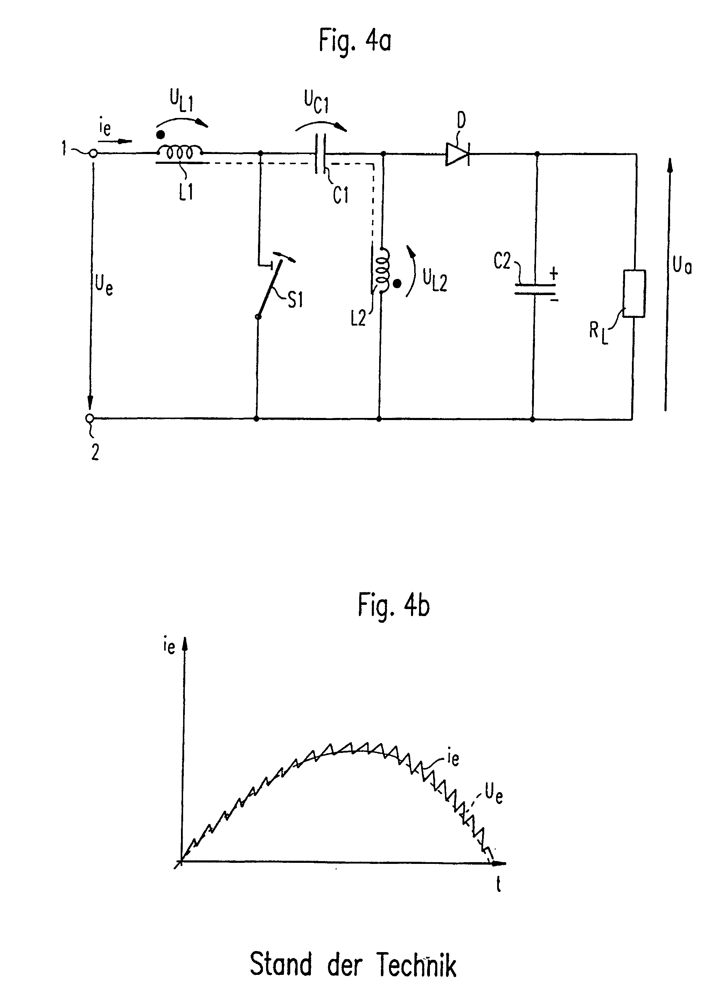

Fig. 4a zeigt eine bekannte SEPIC-Schaltung, wie sie im Oberbegriff des Anspruchs 1 angegeben und beispielsweise auch aus der EP 0 696 841 A1 bekannt ist. Die Schaltung umfaßt eine Serienschaltung aus einer Induktivität L1 und einem Schalter S1 sowie einen Ladekondensator C1, der mit einer weiteren Induktivität L2 zu dem Schalter S1 parallelgeschaltet ist. Die beiden Induktivitäten sind derart miteinander gekoppelt, daß sich die gegenseitig induzierten Spannungen nicht gegenseitig aufheben. Der Kopplungsgrad zwischen den beiden Induktivitäten L1 und L2 ist ein Maß für die Annäherung des Eingangsstroms iₑ(t) an die Hüllkurve der Eingangsspannung Uₑ und stellt somit neben dem Tastverhältnis des Schalters S1 einen zusätzlichen Parameter zum Variieren der Schaltungseigenschaften dar. Die zu betreibende Last R_{L} ist parallel zu einem weiteren (Elektrolyt-)Kondensator C2 anschließbar, wobei der Kondensator C2 über eine Diode D zu der zweiten Induktivität bzw. Spule L2 parallelgeschaltet ist.

Die Funktionsweise der in Fig. 4a dargestellten Schaltung ist wie folgt: ist der Schalter S1 geöffnet und der Ladekondensator C1 aufgeladen, fließt ungeachtet des offenen Schalters S1 über L1, C1 und L2 Strom. Wird der Schalter S1 geschlossen, fließt wie bei dem buck-boost-Konverter weiterhin Strom. Zusätzlich fließt jedoch auch Strom über L2, D sowie die Parallelschaltung aus R_{L} und C2. Da die Induktivitäten L1 und L2 miteinander gekoppelt sind, baut sich in der ersten Spule L1 ein Energiefeld auf, welches beim Öffnen des Schalters S1 erneut für den Stromfluß über C1 und L2 sorgt.

Aufgrund der Kopplung zwischen den Induktivitäten L1 und L2 gilt bei offenem Schalter S1 für die an den Induktivitäten L1 bzw. L2 abfallenden Spannungen U_{L1} = U_{L2} und somit U_{C1} = Uₑ, d.h., daß an dem Ladekondensator C1 die Eingangsspannung Uₑ anliegt. Mit Schließen des Schalters S1 baut sich die an C1 anliegende Spannung Uₑ über die zweite Induktivität L2 wieder ab, wobei die entsprechende Energie auf die erste Induktivität übertragen wird. Die SEPIC-Schaltung weist somit den Vorteil auf, daß unabhängig davon, ob der Schalter S1 1 offen oder geschlossen ist, stets Strom fließt, so daß die Unterbrechungen bzw. Pausen zwischen den einzelnen Sägezähnen des Stromverlaufs iₑ(t) entfallen. Fig. 4b zeigt den zeitlichen Verlauf des Eingangsstroms iₑ(t) in Bezug auf die Hüllkurve der Eingangsspannung Ue. Es ist ersichtlich, daß der Verlauf des Eingangsstroms iₑ(t) mit einem geringen Rippel stark an die Hüllkurve der Eingangsspannung Uₑ angenähert ist und die Unterbrechungen zwischen den einzelnen Sägezähnen von iₑ(t) beseitigt sind.

Der vorliegenden Erfindung liegt ausgehend von der in Fig. 4a gezeigten SEPIC-Schaltung die Aufgabe zugrunde, diese Schaltungsanordnung dahingehend weiterzuentwickeln, daß sie bei Beibehalten der Vorteile der SEPIC-Technik für das Betreiben einer Lampe, insbesondere in einem elektronischen Vorschaltgerät, geeignet ist.

Diese Aufgabe wird durch die kennzeichnenden Merkmale des Anspruchs 1 gelöst.

Nach der erfindungsgemäßen Lösung ist die in Fig. 4a dargestellte Diode durch einen zweiten Schalter ersetzt und die als Last zu betreibende Lampe ist parallel zu diesem zweiten Schalter anschließbar. Insbesondere umfaßt die erfindungsgemäße Schaltungsanordnung parallel zu dem zweiten Schalter einen Lastkreis mit einem Serienresonanzkreis zum Ansteuern einer daran anzuschließenden (Gasentladungs-)Lampe.

Die Schaltungsanordnung gemäß der vorliegenden Erfindung weist den Vorteil auf, daß sie ohne Probleme in gewöhnlichen elektronischen Vorschaltgeräten zum Ansteuern von Lampen Einsatz finden kann. Durch das wechselweise Schalten der beiden Schalter der Schaltungsanordnung fließt in dem ausgangsseitigen Lastkreis der Schaltungsanordnung synchron mit dem Umschalten zwischen den Schaltern wechselweise ein Strom in umgekehrter Richtung. Somit wirkt die erfindungsgemäße Schaltungsanordnung wie ein für das Betreiben von Gasentladungslampen erforderlicher Wechselrichter, der die niederfrequente Netz-Wechselspannung in eine hochfrequente Lampenspannung konvertiert, um ein Flimmern der angeschlossenen Lampe bzw. Lampen zu vermeiden, wobei die erfindungsgemäße Schaltungsanordnung jedoch mit sehr wenigen Schaltungselementen auskommt. Die Vorteile der SEPIC-Technik bleiben gewahrt, d.h. Unterbrechungen zwischen den Sägezähnen des Eingangsstromverlaufs werden vermieden, so daß durch diese Unterbrechungen keine Oberwellen auftreten können.

Durch Verändern des Tastverhältnisses zwischen den Einschaltzeiten der beiden Schalter oder der Schaltfrequenz der Schalter kann eine angeschlossene Lampe auf bekannte Weise gedimmt werden. Des weiteren ist vorteilhafterweise der Kopplungsgrad zwischen den gekoppelten Induktivitäten der Schaltungsanordnung variierbar.

Die Unteransprüche geben weitere vorteilhafte Weiterbildungen der Erfindung an.

Die Erfindung wird nachfolgend anhand bevorzugter Ausführungsbeispiele beschrieben. Es zeigen:
Fig. 1 ein Ansführungsbeispiel der Schaltungsanordnung gemäß der vorliegenden Erfindung,
Fig. 2 ein elektronisches Vorschaltgerät mit der in Fig. 1 gezeigten Schaltungsanordnung,
Fig. 3a-c eine bekannte buck-boost-Konverterschaltung mit Zeitverläufen des Eingangsstroms, und
Fig. 4a und b eine bekannte SEPIC-Schaltung mit einem Zeitverlauf des Eingangsstroms.

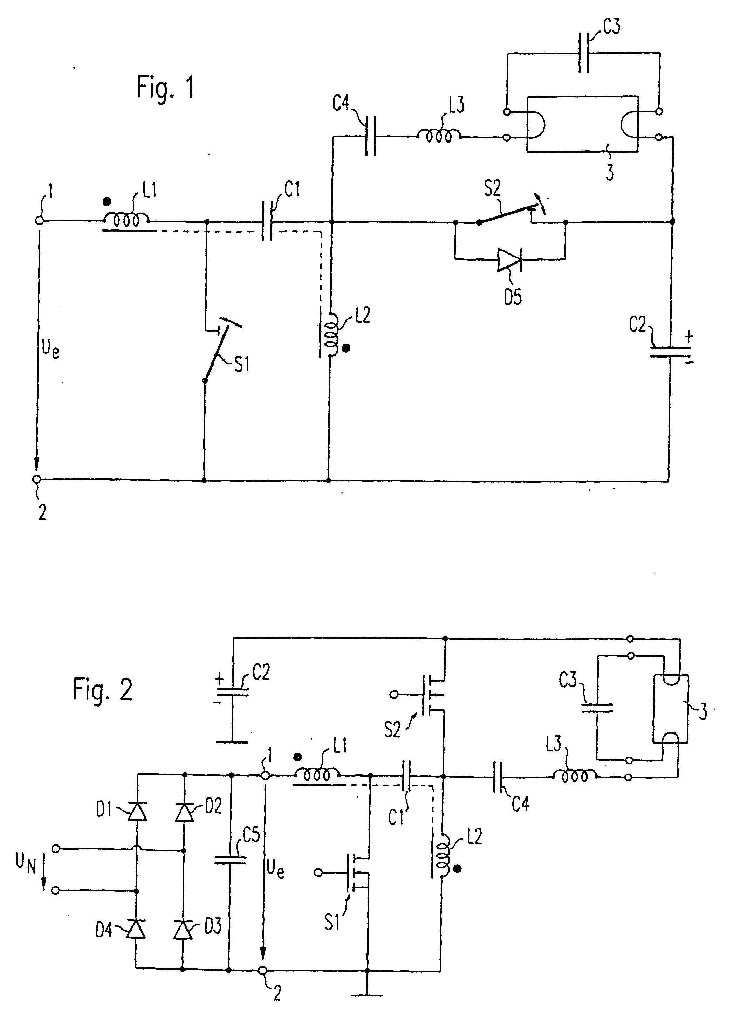

Fig. 1 zeigt ein bevorzugtes Ausführungsbeispiel der erfindungsgemäßen Schaltungsanordnung. Da die Funktionsweise der in Fig. 1 gezeigten Schaltung weitgehend mit derjenigen der in Fig. 4a gezeigten Schaltung übereinstimmt, wird nachfolgend lediglich auf die Unterschiede eingegangen.

Gemäß Fig. 1 ist die in Fig. 4 dargestellte Diode durch einen zweiten Schalter S2 ersetzt. Parallel zu diesem zweiten Schalter S2 ist ein Lastkreis für eine daran anzuschließende Lampe 3, insbesondere für eine Gasentladungslampe, angeordnet. Der Lastkreis umfaßt einen Serienresonanzkreis mit einer weiteren Induktivität L3 und einer weiteren Kapazität C3. Ist eine Lampe 3 an die Schaltungsanordnung angeschlossen, befindet sich die Spule L3 in Serie zu der Lampe, während der Kondensator C3 parallel zu der Lampe angeordnet ist. Der Serienresonanzkreis dient zum Zünden der Lampe, indem die Frequenz der Eingangsspannung Uₑ in die Nähe der Resonanzfrequenz des Serienresonanzkreises gebracht wird. Durch Entfernen der Frequenz der Eingangsspannung von der Resonanzfrequenz kann eine gezündete Lampe gedimmt werden. Vorteilhafterweise ist eine Freilaufdiode D5 zu dem zweiten Schalter S2 parallelgeschaltet, um diesen vor Überspannungen falscher Polarität zu schützen. Die Lampe 3 entspricht somit der in Fig. 4a in allgemeiner Form dargestellten Last R_{L}.

Fig. 2 zeigt ein elektronisches Vorschaltgerät mit der in Fig. 1 gezeigten Schaltungsanordnung. Das elektronische Vorschaltgerät umfaßt eine Brückengleichrichterschaltung, bestehend aus den Dioden D1-D4, die eingangsseitig mit der Netzspannung gespeist wird. Es sei darauf hingewiesen, daß allgemein jede beliebige Gleichrichterschaltung eingesetzt werden kann, die die Netzspannung in eine halbwellengleichgerichtete Eingangsspannung Uₑ für die erfindungsgemäße Schaltungsanordnung umwandeln kann. Ausgangsseitig ist die Gleichrichterschaltung mit der Schaltungsanordnung nach der vorliegenden Erfindung verbunden, wobei zusätzlich zwischen den Eingangsanschlüssen 1, 2 der Schaltungsanordnung ein weiterer Kondensator C5 vorhanden ist, der nicht zum Glätten der Sinushalbwellen der halbwellengleichgerichteten Eingangsspannung Uₑ der erfindungsgemäßen Konverterschaltung, sondern lediglich zum Ausfiltern der durch das Umschalten der Schalter S1 und S2 entstehenden Oberwellen dient. Auch hier kann jedoch jede dem Fachmann geläufige Oberwellenfilteranordnung eingesetzt werden. Der mit dem Lastkreis der Lampe 3 verbundene Kondensator C2 ist über einen Masseanschluß mit der zweiten Induktivität L2 und dem ersten Schalter S1 verbunden. Die beiden Schalter S1 und S2 sind als MOS-Feldeffekttransistoren ausgebildet und können durch Anlegen einer entsprechenden Steuerspannung an ihre Gateanschlüssen aus- und eingeschaltet, d.h. geöffnet und geschlossen werden.

Die beiden Schalter S1 und S2 werden abwechselnd geschaltet, so daß ausgangsseitig an der Lampe 3 eine hochfrequente Wechselspannung zum Betreiben der Lampe 3 auftritt, da in dem Lastkreis synchron mit dem Umschalten der Schalter S1 und S2 jeweils ein Strom in umgekehrter Richtung fließt. Die in Fig. 1 und 2 dargestellte Schaltungsanordnung wirkt somit wie ein gewöhnlicher Wechselrichter, wobei jedoch durch die Anwendung der SEPIC-Technik aufgrund von Unterbrechungen zwischen den Sägezähnen des Eingangsstroms entstehende Oberwellen vermieden werden können und nur sehr wenige Schaltungselemente verwendet werden müssen.

## Patentansprüche

1. Schaltungsanordnung zum Umwandeln einer gleichgerichteten Eingangsspannung (Uₑ) in eine Ausgangs-Wechselspannung (Uₐ) zum Betreiben einer an die Schaltungsanordnung anschließbaren Last (R_{L}; 3),
mit einer an einen ersten Eingangsanschluß (1) angeschlossenen ersten Induktivität (L1) und einem zwischen die erste Induktivität (L1) und einen zweiten Eingangsanschluß (2) geschalteten ersten steuerbaren Schalter (S1),
mit einer zu dem ersten Schalter (S1) parallelgeschalteten Serienschaltung aus einer ersten Kapazität (C1) und einer zweiten Induktivität (L2), die mit der ersten Induktivität (L1) gekoppelt ist, und
mit einer über ein weiteres Schaltungselement (S2) zu der zweiten Induktivität (L2) parallelgeschalteten zweiten Kapazität (C2),
**dadurch gekennzeichnet,**
**daß** das weitere Schaltungselement ein zweiter steuerbarer Schalter (S2) ist, wobei die beiden Schalter (S1, S2) zur Erzeugung der Ausgangs-Wechselspannung (Uₐ) wechselseitig geschlossen bzw. geöffnet werden können und die Last (R_{L}; 3) parallel zu dem zweiten Schalter (S2) anschließbar ist.

2. Schaltungsanordnung nach Anspruch 1,
**dadurch gekennzeichnet,**
**daß** die zweite Induktivität (L2) mit der ersten Induktivität (L1) derart gekoppelt ist, daß sich die durch die Induktivitäten (L1, L2) wechselseitig induzierten Spannungen nicht gegenseitig aufheben.

3. Schaltungsanordnung nach Ansprüche 1 order 2,
**dadurch gekennzeichnet,**
**daß** der erste und zweite Schalter (S1, S2) steuerbare MOS-Feldeffekttransistoren sind.

4. Schaltungsanordnung nach einem der vorhergehenden Ansprüche,
**dadurch gekennzeichnet,**
**daß** der Kopplungsgrad zwischen der ersten und zweiten Induktivität (L1, L2) und/oder das Tastverhältnis zwischen den Einschaltzeiten des ersten und zweiten Schalters (S1, S2) und/oder die Einschaltfrequenz des ersten und zweiten Schalters (S1, S2) variierbar ist.

5. Schaltungsanordnung nach einem der vorhergehenden Ansprüche,
**dadurch gekennzeichnet,**
**daß** eine Diode (D5) zu dem zweiten Schalter (S2) parallelgeschaltet ist.

6. Schaltungsanordnung nach einem der vorhergehenden Ansprüche,
**dadurch gekennzeichnet,**
**daß** ein Lastkreis (C3, L3, C4), an den die Last (R_{L}, 3) anschließbar ist, parallel zu dem zweiten Schalter (S2) angeordnet ist.

7. Schaltungsanordnung nach Anspruch 6,
**dadurch gekennzeichnet,**
**daß** der Lastkreis einen Serienresonanzkreis aus einer dritten Kapazität (C3) und einer dritten Induktivität (L3) urnfaßt.

8. Schaltungsanordnung nach Anspruch 7,
**dadurch gekennzeichnet,**
**daß** der Lastkreis eine mit der dritten Induktivität (L3) in Serie geschaltete vierte Kapazität (C4) als Koppelkondensator umfaßt.

9. Elektronischen Vorschaltgerät zum Betreiben einer Lampe (3) mit einer Schaltungsanordnung nach einem der vorhergehenden Ansprüche,
**dadurch gekennzeichnet,**
**daß** die Lampe (3) als die Last an die Schaltungsanordnung anschließbar ist.

10. Elektronisches Vorschaltgerät nach Anspruch 9 mit einer Schaltungsanordnung nach Anspruch 7 oder 8,
**dadurch gekennzeichnet,**
**daß** die dritte Kapazität (C3) zu der Lampe (3) parallel und die dritte Induktivität (L3) zu der Lampe (3) in Serie geschaltet ist.

11. Elektronisches Vorschaltgerät nach Anspruch 9 oder 10,
**dadurch gekennzeichnet,**
**daß** die Eingangsanschlüsse (1, 2) der Schaltungsanordnung mit einer Gleichrichterschaltung (D1 - D4) verbunden sind, die von einer Netzspannung (U_{N}) gespeist wird.

12. Elektronisches Vorschaltgerät nach einem der Ansprüche 9 bis 11,
**gekennzeichnet durch**
eine Vorrichtung (C5) zum Ausfiltern von Oberwellen.

13. Elektronisches Vorschaltgerät nach Anspruch 12,
**dadurch gekennzeichnet,**
**daß** die Vorrichtung zum Ausfiltern von Oberwellen durch einen zwischen die Eingangsanschlüsse (1, 2) der Schaltungsanordnung geschalteten Filterkondensator (C5) gebildet ist.

## Claims

1. Circuitry arrangement for transforming a rectified input voltage (Uₑ) into an output a.c. voltage (Uₐ) for operating a load (R_{L}; 3) connectable to the circuitry arrangement,
having a first inductance (L1) connected to a first input terminal (1) and a first controllable switch (S1) connected between the first inductance (L1) and a second input terminal (2),
having a series circuit of a first capacitance (C1) and a second inductance (L2) connected in parallel to the first switch (S1), which series circuit is coupled with the first inductance (L1), and
having a second capacitance (C2) connected in parallel to the second inductance (L2) via a further switching element (S2),
**characterized in that**,
the further switching element is a second controllable switch (S2), the two switches (S1, S2), for the generation of the output a.c.voltage (Uₐ), being alternately openable and closeable, and the load (R_{L}; 3) being connectable parallel to the second switch (S2).

2. Circuitry arrangement according to claim 1,
**characterized in that**,
the second inductance (L2) is so coupled with the first inductance (L1) that the voltages reciprocally induced by the inductances (L1, L2) do not mutually cancel out.

3. Circuitry arrangement according to claim 1 or 2,
**characterized in that**,
the first and second switches (S1, S2) are controllable MOS field effect transistors.

4. Circuitry arrangement according to any preceding claim,
**characterized in that**,
the degree of coupling between the first and second inductance (L1, L2) and/or the duty ratio between the switch-on times of the first and second switch (S1, S2 ) and/or the switch-on frequency of the first and second switch (S1, S2) is variable.

5. Circuitry arrangement according to any preceding claim,
**characterized in that**,
a diode (D5) is connected in parallel to the second switch (S2).

6. Circuity arrangement according to any preceding claim,
**characterized in that**,
a load circuit (C3, L3, C4), to which the load (R_{L}; 3) can be connected, is arranged parallel to the second switch (S2).

7. Circuity arrangement according to claim 6,
**characterized in that**,
the load circuit includes a series resonance circuit of a third capacitance (C3) and a third inductance (L3).

8. Circuity arrangement according to claim 7,
**characterized in that**,
the load includes, as coupling capacitor, a fourth capacitance (C4) connected in series with the third inductance (L3).

9. Electronic ballast for operating a lamp (3) having a circuitry arrangement according to any preceding claim,
**characterized in that**,
the lamp (3) is connectable to the circuitry arrangement as the load.

10. Electronic ballast according to claim 9 having a circuity arrangement according to claim 7 or 8,
**characterized in that**,
the third capacitance (C3) is connected in parallel to the lamp (3) and the third inductance (L3) is connected in series to the lamp (3).

11. Electronic ballast according to claim 9 or 10,
**characterized in that**,
the input terminals (1, 2) of the circuitry arrangement are connected with a rectifier circuit (D1 - D4) which is fed by a mains voltage (U_{N}).

12. Electronic ballast according to any of claims 9 to 11,
**characterized by**
a device (C5) for filtering out harmonics.

13. Electronic ballast according to claim 12,
**characterized in that**,
the device for filtering out harmonics is formed by means of a filter capacitor (C5) connected between the input terminals (1, 2) of the circuitry arrangement.

## Revendications

1. Circuit de transformation d'une tension d'entrée redressée (Uₑ) en une tension de sortie alternative (Uₐ) pour l'alimentation d'une charge (R_{L}; 3) pouvant être connectée au circuit, avec
une première inductance (L1) connectée à une première borne d'entrée (1) et un premier interrupteur contrôlé (S1) connecté entre la première inductance (L1) et une seconde borne d'entrée (2),
un circuit série, connecté en parallèle sur le premier interrupteur (S1) et comportant un premier condensateur (C1) et une seconde inductance (L2) couplée avec la première inductance (L1), et
un second condensateur (C2) connecté en parallèle sur la seconde inductance (L2) par l'intermédiaire d'un élément additionnel (S2),
**caractérisé en ce que**
l'élément additionnel est un second interrupteur contrôlé (S2), les deux interrupteurs (S1, S2) pouvant être alternativement fermés, respectivement ouverts, pour produire la tension de sortie alternative (Uₐ), la charge (R_{L}; 3) pouvant être connectée en parallèle sur le second interrupteur (S2).

2. Circuit selon la revendication 1, **caractérisé en ce que** la seconde inductance (L2) est connectée avec la première inductance (L1) de manière à ce que les tensions mutuellement induites par les inductances (L1, L2) ne s'annulent pas mutuellement.

3. Circuit selon la revendication 1 ou 2, **caractérisé en ce que** les premier et second interrupteurs (S1, S2) sont des transistors à effet de champ commandés, de type MOS.

4. Circuit selon l'une des revendications précédentes, **caractérisé en ce que** le degré de couplage entre les première et seconde inductances (L1, L2) et/ou le rapport cyclique entre les instants de fermeture des premier et second interrupteurs (S1, S2) et/ou les fréquences de fermeture des premier et second interrupteurs (S1, S2) peuvent être modifiés.

5. Circuit selon l'une des revendications précédentes, **caractérisé en ce qu'**une diode (D5) est connectée en parallèle sur le second interrupteur (S2).

6. Circuit selon l'une des revendications précédentes, **caractérisé en ce qu'**un circuit de charge (C3, L3, C4), auquel la charge (R_{L}; 3) peut être connectée, est connecté en parallèle sur le second interrupteur (S2).

7. Circuit selon la revendication 6, **caractérisé en ce que** le circuit de charge comporte un circuit série résonant comportant un troisième condensateur (C3) et une troisième inductance (L3).

8. Circuit selon la revendication 7, **caractérisé en ce que** le circuit de charge comporte un quatrième condensateur (C4), formant un condensateur de couplage et connecté en série avec la troisième inductance (L3).

9. Ballast électronique pour l'alimentation d'une lampe (3) comportant un circuit selon l'une des revendications précédentes, **caractérisé en ce que** la lampe (3) peut être connectée au circuit en tant que charge.

10. Ballast électronique selon la revendication 9 avec un circuit selon la revendication 7 ou 8, **caractérisé en ce que** le troisième condensateur (C3) est connecté en parallèle sur la lampe (3) et la troisième inductance (L3) est connectée en série avec la lampe (3).

11. Ballast électronique selon la revendication 9 ou 10, **caractérisé en ce que** les bornes d'entrée (1, 2) du circuit sont connectées à un circuit de redressement (D1-D4), alimenté par une tension de réseau électrique (U_{N}).

12. Ballast électronique selon l'une des revendications 9 à 11, **caractérisé en ce qu'**il comporte un dispositif (C5) de filtrage pour éliminer les hautes fréquences.

13. Ballast électronique selon la revendication 12, **caractérisé en ce que** le dispositif de filtrage des hautes fréquences est constitué par un condensateur de filtrage (C5) connecté entre les bornes d'entrée (1, 2) du circuit.
